# EUROPEAN PATENT APPLICATION

(11) **EP 4 717 562 A1**
(43) Date of publication of application: **01.04.2026**
(21) Application number: 24814149.1
(22) Date of filing: 11.05.2024
(51) Int. Cl.: B62D 25/06

(54) **VEHICLE**

(30) Priority: 31.05.2023 CN 202310644311
(71) Applicant: BYD Company Limited, Shenzhen, Guangdong 518118 (CN)
(72) Inventor: LIAN, Yubo, Shenzhen, Guangdong 518118 (CN); YI, Bengang, Shenzhen, Guangdong 518118 (CN); YANG, Feng, Shenzhen, Guangdong 518118 (CN); YAN, Junfei, Shenzhen, Guangdong 518118 (CN); LIU, Tengyong, Shenzhen, Guangdong 518118 (CN)
(74) Representative: Taor, Simon Edward William
(86) International application number: PCT/CN2024/092681
(87) International publication number: WO 2024/244948

(57) **Abstract**

A vehicle, comprising a top frame longitudinal beam, which extends in the front-rear direction of a vehicle; a C pillar, wherein the top frame longitudinal beam is connected to an upper section of the C pillar, and a lower section of the C pillar is suitable for connecting to a door sill assembly; and a strut beam connected to the top frame longitudinal beam, wherein the strut beam is suitable for connecting to a rear longitudinal beam. The force-bearing capability of the vehicle is improved, thereby ensuring the structural integrity of the vehicle and the member safety.

## Description

### CROSS-REFERENCE TO RELATED APPLICATIONS

The present disclosure claims priority to Chinese Patent Application No. 202310644311.0 filed by BYD Company Limited on May 31, 2023 and the invention title of "VEHICLE", which is incorporated herein by reference in its entirety.

### FIELD

The present disclosure relates to the technical field of vehicle body structures, and in particular, to a vehicle.

### BACKGROUND

In the prior art, when a vehicle is subjected to a top pressure from the top, the strength of the side wall is low and the force transmission is poor, making it prone to deformation under force. When the side wall is subjected to top pressure, the passenger compartment of the vehicle is likely to deform, which in turn may easily cause harm to the passengers.

### SUMMARY

This present disclosure aims to solve at least one of the technical problems in the related art to a certain extent.

To this end, the present disclosure proposes a vehicle.

A vehicle according to an embodiment of the present disclosure includes: a top frame longitudinal beam, which extends along the front-rear direction of the vehicle; a C pillar, wherein the top frame longitudinal beam is connected to an upper section of the C pillar, and a lower section of the C pillar is adapted to be connected to a door sill assembly; and a strut beam, wherein the top frame longitudinal beam is connected to the strut beam; wherein the strut beam is adapted to be connected to a rear longitudinal beam.

Therefore, the C pillar and the strut beam can disperse the force borne by the top frame longitudinal beam, and at the same time, a closed annular force transmission structure is formed among the top frame longitudinal beam, the C pillar, the door sill assembly, the rear longitudinal beam and the strut beam, which improves the load-bearing capacity of the vehicle and ensures the structural integrity of the vehicle and the safety of passengers.

Additional aspects and advantages of the present disclosure will be partially set forth in the following description, and partially will become apparent from the following description, or be understood through practice of the present disclosure.

### BRIEF DESCRIPTION OF THE DRAWINGS

FIG. 1 is an exploded schematic view of a vehicle provided in an embodiment of the present disclosure;
FIG. 2 is a cross-sectional view of the position of a top frame reinforcing beam of a vehicle provided in an embodiment of the present disclosure;
FIG. 3 is a first partial schematic view of a vehicle provided in an embodiment of the present disclosure;
FIG. 4 is a second partial schematic view of a vehicle provided in an embodiment of the present disclosure;
FIG. 5 is a third partial schematic view of a vehicle provided in an embodiment of the present disclosure;
FIG. 6 is a fourth partial schematic view of a vehicle provided in an embodiment of the present disclosure;
FIG. 7 is a fifth partial schematic view of a vehicle provided in an embodiment of the present disclosure;
FIG. 8 is a schematic view of a vehicle provided in an embodiment of the present disclosure;
FIG. 9 is a side schematic view of a vehicle provided in an embodiment of the present disclosure.

### DETAILED DESCRIPTION

The embodiments of the present disclosure will be described in detail below. Examples of the embodiments are shown in the accompanying drawings, wherein the same or similar reference numerals denote the same or similar elements or elements with the same or similar functions throughout. The embodiments described below with reference to the accompanying drawings are exemplary and are intended to explain the present disclosure, but should not be construed as limiting the present disclosure.

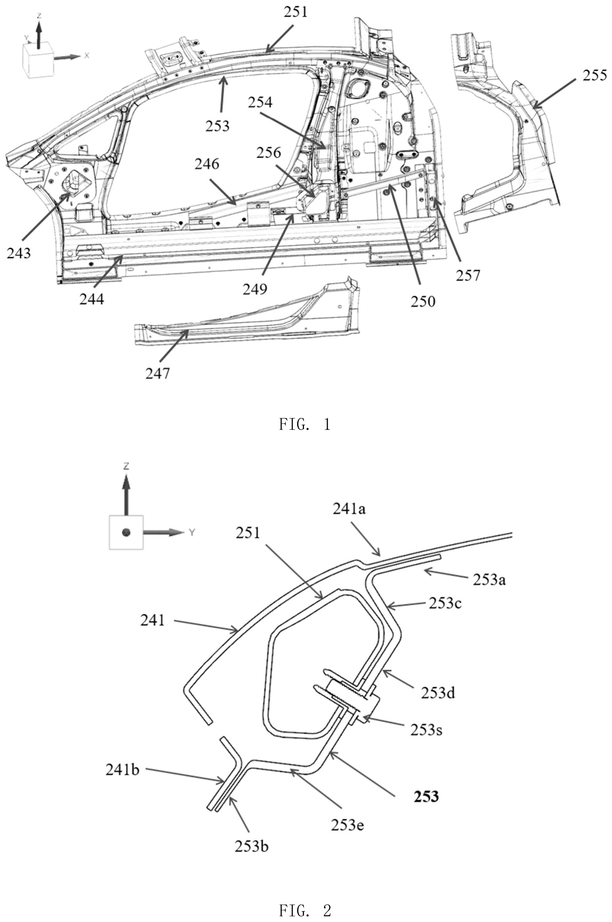

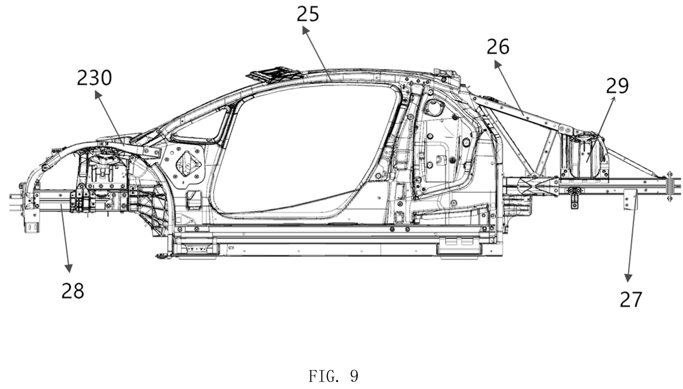

Referring to FIG. 1 to FIG. 9, an embodiment of the present disclosure provides a vehicle, which includes: a top frame longitudinal beam 25 extending along the front-rear direction of the vehicle; a C pillar, wherein the top frame longitudinal beam 25 is connected to an upper section of the C pillar, and a lower section of the C pillar is adapted to be connected to a door sill assembly 30; and a strut beam 26, wherein the top frame longitudinal beam 25 is connected to the strut beam 26; wherein the strut beam 26 is adapted to be connected to a rear longitudinal beam 27.

The vehicle has a length direction, a width direction, and a height direction. The length direction of the vehicle may be the X direction in the FIG., i.e., the front-rear direction of the vehicle; the width direction of the vehicle may be the Y direction in the FIG.; and the height direction of the vehicle may be the Z direction in the FIG.

The top frame longitudinal beam 25 is located at the top of the vehicle frame structure, and the top frame longitudinal beam 25 is connected to the C pillar, which is adapted to be connected to the door sill assembly 30. When the top of the vehicle is subjected to pressure, the pressure from the top can be transmitted to the lower part of the vehicle through the C pillar and then to the door sill assembly 30, which ensures the force transmission path when the top of the vehicle is stressed and improves the impact resistance of the vehicle top.

In addition, a strut beam 26 is connected between the top frame longitudinal beam 25 and the rear longitudinal beam 27. The C pillar and the strut beam 26 can disperse the force borne by the top frame longitudinal beam 25, and at the same time, a closed annular force transmission structure is formed among the top frame longitudinal beam 25, the C pillar, the rear longitudinal beam 27, and the strut beam 26, which prevents the vehicle frame structure from being crushed or damaged, improves the load-bearing capacity of the vehicle, and ensures the structural integrity of the vehicle and the safety of passengers.

The vehicle provided in the embodiment of the present disclosure includes a top frame longitudinal beam 25 extending along the front-rear direction of the vehicle; a C pillar, wherein the top frame longitudinal beam 25 is connected to the C pillar, and the C pillar is adapted to be connected to a door sill assembly 30; and a strut beam 26, wherein the top frame longitudinal beam 25 is connected to the strut beam 26; wherein the strut beam 26 is adapted to be connected to a rear longitudinal beam 27. The C pillar and the strut beam 26 can disperse the force borne by the top frame longitudinal beam 25, and at the same time, a closed annular force transmission structure is formed among the top frame longitudinal beam 25, the C pillar, the door sill assembly 30, the rear longitudinal beam 27, and the strut beam 26, which prevents the vehicle frame structure from being crushed or damaged, improves the load-bearing capacity of the vehicle, and ensures the structural integrity of the vehicle and the safety of passengers.

The vehicle further includes an upper side beam 230, and the top frame longitudinal beam 25 is connected to the upper side beam 230;

The upper side beam 230 is adapted to be connected to a front longitudinal beam 28.

The strut beam 26 may be connected to the rear end of the top frame longitudinal beam 25, and the upper side beam 230 may be connected to the front end of the top frame longitudinal beam 25. The upper side beam 230 is connected between the top frame longitudinal beam 25 and the front longitudinal beam 28, which can further transmit the pressure on the top of the vehicle to the front longitudinal beam 28, increasing the force transmission path when the top of the vehicle is stressed.

The vehicle further includes an A pillar. In the front-rear direction of the vehicle, the A pillar is spaced apart from the C pillar and is located on the front side of the C pillar. The top frame longitudinal beam 25 is connected to the upper section of the A pillar, and the upper side beam 230 is connected to the A pillar.

In the case where the A pillar connects the top frame longitudinal beam 25 and the upper side beam 230, when the top of the vehicle is subjected to pressure, the pressure from the top can be transmitted to the upper side beam 230 at the front of the vehicle through the A pillar, which ensures the force transmission path when the top of the vehicle is stressed and improves the impact resistance of the vehicle top.

The lower section of the A pillar is connected to the door sill assembly 30.

The upper parts of the A pillar and the C pillar are connected to the top frame longitudinal beam 25, the lower parts of the A pillar and the C pillar are connected to the door sill assembly, and the A pillar and the C pillar are spaced apart in the front-rear direction of the vehicle.

When the top of the vehicle is subjected to pressure, the pressure from the top can be transmitted to the lower part of the vehicle through the A pillar and the C pillar and then to the door sill assembly, which increases the force transmission path when the top of the vehicle is stressed and improves the impact resistance of the vehicle top.

The top frame longitudinal beam 25 includes a top frame outer panel 241, a top frame inner panel 253, and a top frame reinforcing beam 251. The top frame outer panel 241 and the top frame inner panel 253 are connected oppositely to form a top cavity, and the top frame reinforcing beam 251 is arranged in the top cavity.

As shown in FIG. 2, the upper end 241a of the top frame outer panel 241 is connected to the upper end 253a of the top frame inner panel 253 by an adhesive, and the lower end 241b of the top frame outer panel 241 is further connected to the lower end 253b of the top frame inner panel 253 by an adhesive, so that the vehicle meets the A pillar section force requirement under the overall vehicle force decomposition; meanwhile, the top frame reinforcing beam 251 and the top frame inner panel 253 are connected by a combination of gluing and bolting, which can increase the connection reliability and structural integrity between the top frame reinforcing beam 251 and the top frame inner panel 253, and improve the deformation resistance and top pressure resistance of the top frame structure of B-pillarless vehicles such as sports cars.

In addition, the top frame outer panel 241 and the top frame inner panel 253 may be made of metal materials, alloy materials, or polymer composite materials, and the top frame outer panel 241 and the top frame inner panel 253 are connected by welding or an adhesive.

The cross-section of the top frame reinforcing beam 251 is an annular closed structure.

The top frame reinforcing beam 251 is formed by the hot steam expansion pipe forming process, so that it has the advantages of high strength and the ability to form complex shapes. The top frame reinforcing beam 251 can thus form a pipe beam structure with variable cross-sections, and the trend of the pipe beam structure changes with the shape of the top frame. This not only meets the collision safety requirements during vehicle frontal collision and top pressure, but also meets the diversified requirements of the curvature of the top frame shape, so as to improve the streamlined appearance of the two-door sports cars it is used in.

In addition, the high strength of the top frame reinforcing beam 251 can reduce the cross-section of the A pillar, achieving a lightweight effect under the premise of meeting collision safety.

Referring to FIG. 2, the top frame reinforcing beam 251 is connected to the top frame inner panel 253, and the two opposite surfaces of the top frame reinforcing beam 251 and the top frame inner panel 253 are attached to each other.

The three side walls of the C-shaped structure formed by the top frame reinforcing beam 251 are respectively connected to the three surfaces 253c, 253d, and 253e of the top frame inner panel 253 via an adhesive. Meanwhile, to enhance the strength and reliability of the connection between the top frame reinforcing beam 251 and the top frame inner panel 253, the top frame inner panel 253d is connected to the C-shaped structure of the top frame reinforcing beam 251 through bolts 253s, ensuring that the closed cross-section formed by the top frame inner panel 253 and the top frame reinforcing beam 251 can meet the cross-sectional force requirements.

In addition, a reserved space is provided between the top frame outer panel 241 and the top frame reinforcing beam 251 to ensure the assemblability of the top frame reinforcing beam 251. This satisfies the vehicle's styling curvature requirements while meeting the collision safety requirements during frontal collisions and top pressure scenarios.

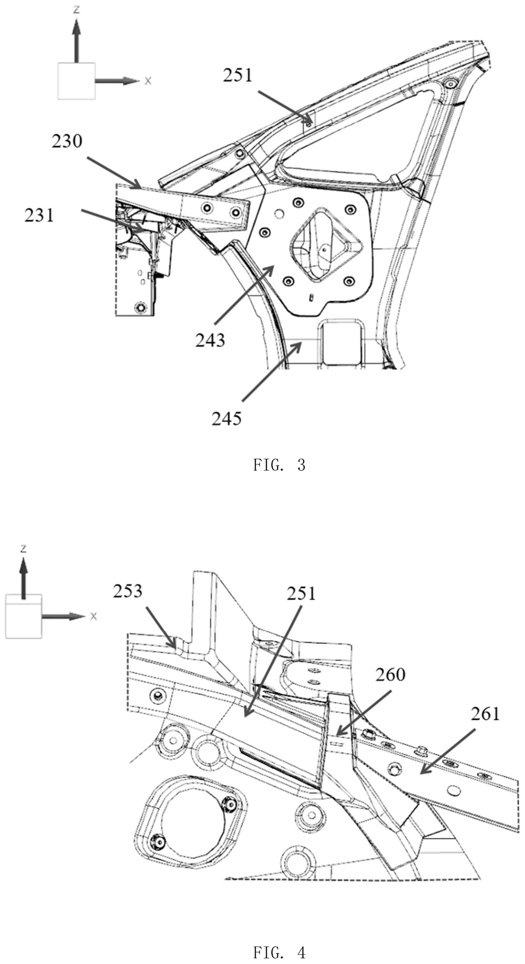

Referring to FIG. 3, the vehicle further includes an A pillar top frame reinforcing beam joint 243, which is connected to the A pillar. Both the upper side beam 230 and the top frame reinforcing beam 251 are connected to the A pillar top frame reinforcing beam joint 243.

The A pillar top frame reinforcing beam joint 243 can be made of cast aluminum material and formed using a high-vacuum die-casting process, enabling it to provide complex curved surfaces and integrate multiple mounting points to meet the connection requirements with other components.

The A pillar top frame reinforcing beam joint 243 is respectively connected to the A pillar, the top frame reinforcing beam, and the upper side beam, making the force transmission between the top frame reinforcing beam and the upper side beam smoother. Moreover, since the A pillar top frame reinforcing beam joint 243 is an integrally formed component, it has high structural strength, is not easily crushed during force transmission, and can better transmit forces in the front-rear direction. For forces from the vertical direction, it can smoothly transmit forces from the top frame reinforcing beam to the A pillar and the upper side beam, further dispersing and transmitting the forces to the door sill beam and the front longitudinal beam, thereby increasing the force transmission paths and preventing stress concentration in various components.

The A pillar top frame reinforcing beam joint 243 is further connected to the instrument panel tube beam in the passenger compartment and the door hinge, which can reuse the structure, reduce the number of parts, and lower the weight. The connection to the door hinge can improve the stability of the door connection and the operational stability of the door by virtue of its own strength.

The A pillar further includes an A pillar inner panel, an A pillar outer panel, and a partition plate. The A pillar inner panel and the A pillar outer panel are connected to form a cavity, the partition plate divides the cavity into a first cavity and a second cavity. An A pillar reinforcement is arranged in the second cavity and connected to the A pillar inner panel. The A pillar reinforcement is connected to the A pillar top frame reinforcing beam joint and the door sill beam. The A pillar reinforcement extends along the height direction of the vehicle, and is an integrally formed structure. This A pillar structure can effectively improve the strength of the A pillar. Through the cooperation of the A pillar reinforcement and the cavity structure, the strength of the A pillar structure is greatly enhanced. Additionally, the connection between the A pillar top frame reinforcing beam joint and the A pillar reinforcement can further improve the force transmission capability between the A pillar top frame reinforcing beam joint and the A pillar.

The A pillar reinforcement is connected to the instrument panel tube beam and the front longitudinal beam, enabling better transmission of forces to the instrument panel tube beam and the front longitudinal beam.

Referring to FIG. 3, the A pillar includes an A pillar reinforcement 245. The A pillar reinforcement 245 is arranged with an L-shaped or U-shaped surface lap joint to facilitate the connection between the A pillar top frame reinforcing beam joint 243 and the A pillar reinforcement 245. Meanwhile, the front end of the A pillar top frame reinforcing beam joint 243 is connected to the front wheel housing 231 of the front frame and the upper side beam 230 via bolts, and the rear end of the A pillar top frame reinforcing beam joint 243 is connected to the top frame reinforcing beam 251 and the top frame inner panel 253 via bolts. This can realize Z-direction force transmission and energy absorption during frontal top pressure and Y-direction force transmission and energy absorption during side collisions, improving the overall strength of the vehicle.

Referring to FIG. 4, the vehicle further includes a C pillar top frame reinforcing beam joint 260, which is connected to the C pillar and connects the top frame reinforcing beam 251 and the strut beam 26.

The C pillar top frame reinforcing beam joint 260 is formed using a high-vacuum die-casting process. The front end of the C pillar top frame reinforcing beam joint 260 is connected to the A pillar top frame reinforcing beam 251 of the top frame and the top frame inner panel 253, and an adhesive bonding combined with bolt connection method can be adopted to ensure the reliability of the connection at the front end of the C pillar top frame reinforcing beam joint 260. Meanwhile, the rear end of the C pillar top frame reinforcing beam joint 260 is further connected to the front strut of the rear wheel housing 261 of the rear frame using the adhesive bonding combined with bolt connection method, so as to form a stable connection among the front wheel housing 231, the upper side beam 230, the top frame inner panel 253, and the front strut of the rear wheel housing 261. This enables the vehicle to better transmit loads in various collision conditions such as rear collisions and side collisions, and further absorb collision energy through vehicle deformation, maximizing the protection of passenger safety.

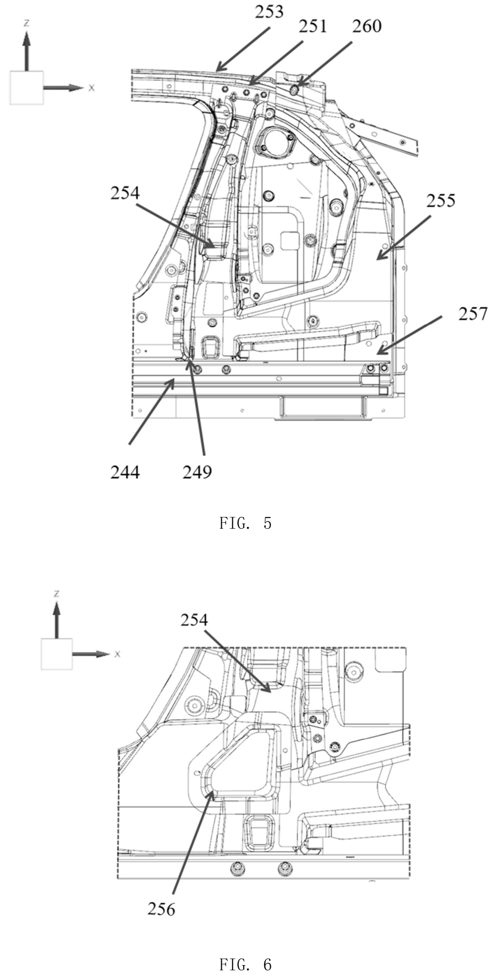

Referring to FIG. 5, the C pillar includes a C pillar front reinforcement 254 and a C pillar rear reinforcement 255. In the front-rear direction of the vehicle, at least part of the C pillar front reinforcement 254 is spaced apart from the C pillar rear reinforcement 255.

The C pillar front reinforcement 254 and the C pillar rear reinforcement 255 can reinforce the C pillar in the front-rear direction of the vehicle. In the case where at least part of the C pillar front reinforcement 254 is spaced apart from at least part of the C pillar rear reinforcement 255, the C pillar front reinforcement 254 and the C pillar rear reinforcement 255 can form two force transmission paths in the front-rear direction of the vehicle, improving the impact resistance of the vehicle.

In one embodiment, referring to FIG. 5, the upper end of the C pillar front reinforcement 254 is connected to the top frame longitudinal beam 25, the lower end of the C pillar front reinforcement 254 is connected to the door sill assembly, the upper end of the C pillar rear reinforcement 255 is connected to the top frame longitudinal beam 25, and the lower end of the C pillar rear reinforcement 255 is connected to the C pillar front reinforcement 254. This ensures the stability of force transmission in the two force transmission paths of the C pillar front reinforcement 254 and the C pillar rear reinforcement 255.

The C pillar rear reinforcement 255 includes a first section reinforcement and a second section reinforcement that are connected to each other;

The first section reinforcement extends along the height direction of the vehicle, the upper end of the first section reinforcement is connected to the top frame longitudinal beam 25, the lower end of the first section reinforcement is connected to the upper end of the second section reinforcement, and the lower end of the second section reinforcement is connected to the C pillar front reinforcement 254, the second section reinforcement extends along the front-rear direction of the vehicle.

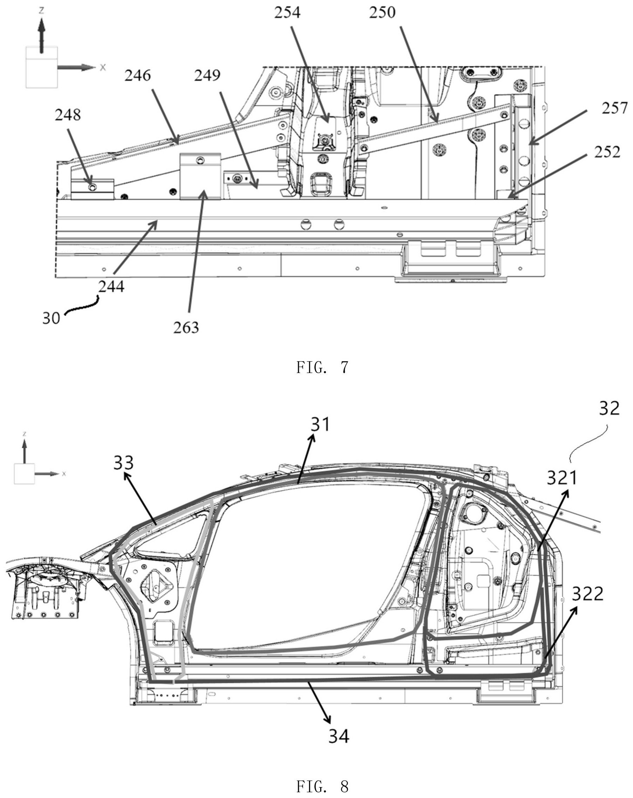

Regarding the C pillar front reinforcement 254, referring to FIG. 5, the C pillar front reinforcement 254 can be made of ultra-high-strength hot-formed steel. The upper part of the C pillar front reinforcement 254 is connected to the top frame reinforcing beam 251 using an adhesive, and the connection position is reinforced by bolts. Both sides of the C pillar front reinforcement 254 are connected to the top frame inner panel 253 via flanges and an adhesive. Referring to FIG. 7, the middle and lower parts of the C pillar front reinforcement 254 are connected to the front door sill diagonal brace rail 246 and the rear door sill diagonal brace rail 250 via bolts, and the lower part of the C pillar front reinforcement 254 is connected to the door sill reinforcing beam 244 and the door sill support member III 249 via Y-direction bolts.

Regarding the C pillar rear reinforcement 255, referring to FIG. 5, the C pillar rear reinforcement 255 is overall C-shaped, formed by the first section reinforcement and the second section reinforcement, and is formed using carbon fiber composite materials. The upper part of the C pillar rear reinforcement 255 is connected to the top frame reinforcing beam 251 and the C pillar top frame reinforcing beam joint 260 using an adhesive; the lower part of the C pillar rear reinforcement 255 is connected to the C pillar front reinforcement 254, the top frame inner panel 253, and the C pillar inner column 257 via adhesive bonding, so that the annular structure formed by the top frame reinforcing beam 251, the C pillar front reinforcement 254, the C pillar rear reinforcement 255, and the door sill reinforcing beam 244 has two force transmission paths from top to bottom.

**In the** above two top-to-bottom force transmission paths, one path transmits force downward from the top frame reinforcing beam 251 to the door sill reinforcing beam 244 through the C pillar front reinforcement 254; the other path transmits force downward from the top frame reinforcing beam 251 to the door sill reinforcing beam 244 through the C pillar rear reinforcement 255. Combined with the C-shaped C pillar rear reinforcement 255, the above annular structure has excellent Z-direction and X-direction force transmission paths, improving the stability of the vehicle.

The vehicle further includes a side wall inner panel and a side wall outer panel, which are connected to form a door sill beam cavity. A door sill reinforcing beam assembly is arranged in the door sill beam cavity to form the door sill assembly 30.

The side wall inner panel and the side wall outer panel can protect the door sill reinforcing beam assembly; when the door sill reinforcing beam assembly is arranged in the door sill beam cavity, the door sill beam cavity can buffer the deformation of the door sill reinforcing beam assembly, improving the deformation resistance of the vehicle.

Referring to FIG. 6, the vehicle further includes a C pillar energy-absorbing box 256. The C pillar front reinforcement is arranged between the side wall inner panel and the side wall outer panel, and the C pillar energy-absorbing box 256 is arranged between the C pillar front reinforcement 254 and the side wall outer panel.

The C pillar energy-absorbing box 256 can be made of high-strength and high-rigidity carbon fiber composite materials, and is adhesively connected to the C pillar front reinforcement 254 through flanges, and further adhesively connected to the side wall outer panel. The C pillar energy-absorbing box 256 can better absorb energy in top pressure and side pole collision conditions for B-pillarless vehicle bodies, ensuring passenger safety while connecting to the C pillar front reinforcement 254.

Referring to FIG. 7, the door sill reinforcing beam assembly includes a door sill reinforcing beam 244, and the lower end of the C pillar front reinforcement 254 is connected to the door sill reinforcing beam 244.

Since the upper end of the C pillar front reinforcement 254 is connected to the top frame longitudinal beam 25 and the lower end is connected to the door sill reinforcing beam 244, the force on the top frame longitudinal beam 25 can be transmitted to the door sill reinforcing beam 244 through the C pillar front reinforcement 254, improving the deformation resistance of the vehicle.

The door sill reinforcing beam assembly further includes a front door sill diagonal brace rail 246, which is obliquely connected between the door sill reinforcing beam 244 and the C pillar front reinforcement 254;

In the front-rear direction of the vehicle, the front door sill diagonal brace rail 246 is arranged in front of the C pillar front reinforcement 254.

The vehicle further includes a door sill support member I 248, a door sill support member II 263, and a door sill support member III 249. The door sill support member I 248 and the door sill support member II 263 are connected between the front door sill diagonal brace rail 246 and the door sill reinforcing beam 244, and the door sill support member III 249 is connected to the lower end of the C pillar front reinforcement 254 to improve the structural strength and force transmission stability of the vehicle.

In addition, the door sill reinforcing beam 244 is arranged with multiple mounting holes to facilitate the installation of the battery pack. In side pole collisions, the C pillar energy-absorbing box 256 can play a role in dispersing force transmission, thereby minimizing the intrusion amount of the battery pack and providing better protection for high-voltage components such as the battery pack.

Referring to FIG. 7, the vehicle further includes a C pillar inner column 257, and both ends of the C pillar inner column 257 are respectively connected to the second section reinforcement and the door sill reinforcing beam 244.

The upper end of the C pillar inner column 257 can be connected to the second section reinforcement, and the lower end can be connected to the tail end of the door sill reinforcing beam 244. The C pillar inner column 257 is spaced apart from the C pillar front reinforcement 254 in the front-rear direction of the vehicle. On the basis of supporting the second section reinforcement through the C pillar inner column 257, force can be transmitted between the second section reinforcement and the door sill reinforcing beam 244 through the C pillar inner column 257, increasing the force transmission paths of the vehicle.

Referring to FIG. 7, the door sill assembly further includes a rear door sill diagonal brace rail 250, which is obliquely connected between the C pillar front reinforcement 254 and the C pillar inner column 257.

In side pole collision and side collision conditions, the impact force in the Y direction is transmitted from outside to inside through a Y-direction force transmission path composed of the door sill reinforcing beam 244, the door sill support member I 248, the door sill support member II 263, the front door sill diagonal brace rail 246, the door sill support member III 249, and the door sill support member IV 252. In the X direction, the force transmission path from rear to front includes a main X-direction force transmission path in the lower part of the door sill, composed of the C pillar inner column 257, the door sill support member IV 252, and the door sill reinforcing beam 244. Meanwhile, the C pillar inner column 257, the rear door sill diagonal brace rail 250, the C pillar front reinforcement 254, and the front door sill diagonal brace rail 246 can further form an X-direction force transmission path, which constitutes the force transmission path for rear collisions in the upper part of the door sill. The cooperation of the force transmission paths for rear collisions in the lower and upper parts of the door sill improves the force transmission effect of the vehicle.

Referring to FIG. 3 and FIG. 8, the A pillar includes an A pillar reinforcement 245, and the front section of the top frame reinforcing beam 251, the A pillar top frame reinforcing beam joint 243, the A pillar reinforcement 245, and the front section of the door sill reinforcing beam 244 form an A pillar ring.

The A pillar top frame reinforcing beam joint 243 is connected to the A pillar reinforcement 245 through bolts, so that the A pillar reinforcement 245 can be connected to the front wheel housing 231 of the front frame and the upper side beam 230 at the front end through the A pillar top frame reinforcing beam joint 243 using bolts, and connected to the top frame reinforcing beam 251 and the top frame inner panel 253 at the rear end through bolts. This enables force transmission and energy absorption in frontal collision, small offset collision, and top pressure conditions.

The vehicle further includes a rear wheel housing 29, which is connected to the rear longitudinal beam 27, and the strut beam 26 is connected to the rear wheel housing 29;

In the height direction of the vehicle, the strut beam 26 is spaced apart from the rear longitudinal beam 27.

When the strut beam 26 is spaced apart from the rear longitudinal beam 27, the strut beam 26 and the rear longitudinal beam 27 can form two force transmission paths in the front-rear direction of the vehicle; when the rear wheel housing 29 connects the strut beam 26 and the rear longitudinal beam 27, it can improve the stability of force transmission between the strut beam 26 and the rear longitudinal beam 27.

The vehicle further includes a first rear wheel housing stabilizer bar, which is arranged on the rear side of the strut beam, with one end connected to the rear wheel housing and the other end connected to the rear longitudinal beam. In the height direction of the vehicle, at least part of the first rear wheel housing stabilizer bar is spaced apart from the rear longitudinal beam. This structure disperses and transmits the force of the stabilizer bar to the rear longitudinal beam through the wheel housing, enabling the formation of multiple force transmission paths on the rear side.

The vehicle further includes a second rear wheel housing stabilizer bar, which is arranged between the wheel housing and the C pillar rear reinforcement, with its upper end connected to the strut beam and its lower end connected to the rear longitudinal beam. Multiple second rear wheel housing stabilizer bars and the strut beam form a triangular stable structure, which stabilizes the rear wheel housing and provides multiple paths to transmit the force of the strut beam to the rear wheel housing.

Referring to FIG. 1 and FIG. 8, the A pillar is connected to the door sill reinforcing beam 244; in the front-rear direction of the vehicle, the A pillar is located on the front side of the front door sill diagonal brace rail 246, and the middle section of the top frame reinforcing beam 251, the A pillar, the C pillar front reinforcement 254, the door sill reinforcing beam 244, and the front door sill diagonal brace rail 246 form a side door ring 31.

The door sill assembly further includes an inner door sill sealing plate 247. The side door ring formed by the middle section of the top frame reinforcing beam 251, the A pillar, the C pillar front reinforcement 254, and the door sill reinforcing beam 244 can improve the structural strength of the vehicle at the door frame position.

Referring to FIG. 8, the rear section of the top frame reinforcing beam 251, the C pillar front reinforcement 254, the C pillar rear reinforcement 255, and the rear section of the door sill reinforcing beam 244 form a C pillar ring 32.

The C pillar ring 32 includes a first C pillar ring 321 and a second C pillar ring 322. The first C pillar ring 321 is composed of the C pillar front reinforcement 254 and the C pillar rear reinforcement 255; the second C pillar ring 322 is formed by the C pillar rear reinforcement 255 and the door sill reinforcing beam 244 at the rear end, which can realize force transmission and energy absorption in rear collision, top pressure, and side collision conditions.

In addition, a large side wall ring 34 is formed outside the three small rings, i.e., the A pillar ring 33, the side door ring 31, and the C pillar ring 32. The large annular structure of the side wall ring is mainly composed of the A pillar reinforcement 245, the inner door sill sealing plate 247, the C pillar rear reinforcement 255, and the top frame reinforcing beam 251. Each part of this large annular structure is connected to the top frame inner panel 253 through welding points, ensuring that the vehicle can well disperse force transmission in collision conditions such as frontal collision, rear collision, small offset collision, top pressure, side pole collision, and side collision, avoiding large deformation of the passenger compartment due to excessive local stress, and thus achieving the protection of passengers.

In this disclosure, unless otherwise clearly specified and limited, a first feature being "on" or "under" a second feature may mean that the first and second features are in direct contact, or that the first and second features are in indirect contact through an intermediate medium. Moreover, a first feature being "above", "over" and "on" a second feature may mean that the first feature is directly above or obliquely above the second feature, or simply means that the level of the first feature is higher than that of the second feature. A first feature being "below", "under" and "beneath" a second feature may mean that the first feature is directly below or obliquely below the second feature, or simply means that the level of the first feature is lower than that of the second feature.

In the description of this specification, reference to the terms "one embodiment", "some embodiments", "examples", "specific examples", or "some examples" etc., means that a specific feature, structure, material, or characteristic described in conjunction with the embodiment or example is included in at least one embodiment or example of the present disclosure. In this specification, the schematic representations of the above terms do not necessarily refer to the same embodiment or example. Furthermore, the described specific features, structures, materials, or characteristics may be combined in any suitable manner in any one or more embodiments or examples. In addition, those skilled in the art can combine and combine different embodiments or examples and features of different embodiments or examples described in this specification without conflicting with each other.

Although the embodiments of the present disclosure have been shown and described above, it can be understood that the above embodiments are exemplary and should not be construed as limiting the present disclosure. Those of ordinary skill in the art can make changes, modifications, substitutions, and variations to the above embodiments within the scope of the present disclosure.

## Claims

1. A vehicle, comprising:
a top frame longitudinal beam (25), extending along the front-rear direction of the vehicle;
a C pillar, the top frame longitudinal beam (25) being connected to an upper section of the C pillar, and a lower section of the C pillar being adapted to be connected to a door sill assembly (30);
a strut beam (26), the top frame longitudinal beam (25) being connected to the strut beam (26);
the strut beam (26) being adapted to be connected to a rear longitudinal beam (27).

2. The vehicle according to claim 1, wherein further comprising an upper side beam (230), the top frame longitudinal beam (25) is connected to the upper side beam (230);
wherein the upper side beam (230) is adapted to be connected to a front longitudinal beam (28).

3. The vehicle according to claim 2, wherein further comprising an A pillar, in the front-rear direction of the vehicle, the A pillar is spaced apart from the C pillar and is located on the front side of the C pillar, the top frame longitudinal beam (25) is connected to an upper section of the A pillar, and the upper side beam (230) is connected to the A pillar.

4. The vehicle according to claim 3, wherein further comprising an A pillar top frame reinforcing beam joint (243), the A pillar top frame reinforcing beam joint (243) is connected to the A pillar, and both the upper side beam (230) and the top frame reinforcing beam (251) are connected to the A pillar top frame reinforcing beam joint (243).

5. The vehicle according to claim 3 or 4, wherein a lower section of the A pillar is connected to the door sill assembly (30).

6. The vehicle according to claim 5, wherein the C pillar comprises a C pillar front reinforcement (254) and a C pillar rear reinforcement (255), and in the front-rear direction of the vehicle, at least part of the C pillar front reinforcement (254) is spaced apart from the C pillar rear reinforcement (255).

7. The vehicle according to claim 6, wherein the upper and lower ends of the C pillar front reinforcement (254) are respectively connected to the top frame longitudinal beam (25) and the door sill assembly (30), the upper end of the C pillar rear reinforcement (255) is connected to the top frame longitudinal beam (25), and the lower end of the C pillar rear reinforcement (255) is connected to the C pillar front reinforcement (254).

8. The vehicle according to claim 6 or 7, wherein the C pillar rear reinforcement (255) comprises a first section reinforcement and a second section reinforcement that are connected to each other;
the first section reinforcement extends along the height direction of the vehicle, the upper end of the first section reinforcement is connected to the top frame longitudinal beam (25), the lower end of the first section reinforcement is connected to the upper end of the second section reinforcement, and the lower end of the second section reinforcement is connected to the C pillar front reinforcement (254), wherein the second section reinforcement extends along the front-rear direction of the vehicle.

9. The vehicle according to claim 8, wherein further comprising a side wall inner panel and a side wall outer panel, the side wall inner panel and the side wall outer panel are connected to form a door sill beam cavity, and a door sill reinforcing beam assembly is arranged in the door sill beam cavity to form the door sill assembly (30).

10. The vehicle according to claim 9, wherein further comprising a C pillar energy-absorbing box (256), the C pillar front reinforcement is arranged between the side wall inner panel and the side wall outer panel, and the C pillar energy-absorbing box (256) is arranged between the C pillar front reinforcement (254) and the side wall outer panel and connected to the C pillar front reinforcement (254).

11. The vehicle according to claim 9 or 10, wherein the door sill reinforcing beam assembly comprises a door sill reinforcing beam (244), and the lower end of the C pillar front reinforcement (254) is connected to the door sill reinforcing beam (244).

12. The vehicle according to claim 11, wherein the door sill reinforcing beam assembly further comprises a front door sill diagonal brace rail (246), and the front door sill diagonal brace rail (246) is obliquely connected between the door sill reinforcing beam (244) and the C pillar front reinforcement (254);
wherein in the front-rear direction of the vehicle, the front door sill diagonal brace rail (246) is arranged in front of the C pillar front reinforcement (254).

13. The vehicle according to claim 11 or 12, wherein further comprising a C pillar inner column (257), both ends of the C pillar inner column (257) are respectively connected to the second section reinforcement and the door sill reinforcing beam (244).

14. The vehicle according to claim 13, wherein the door sill assembly (30) further comprises a rear door sill diagonal brace rail (250), and the rear door sill diagonal brace rail (250) is connected between the C pillar front reinforcement (254) and the C pillar inner column (257).

15. The vehicle according to claim 14, wherein further comprising a rear wheel housing (29), the rear wheel housing (29) is connected to the rear longitudinal beam (27), and the strut beam (26) is connected to the rear wheel housing;
in the height direction of the vehicle, the strut beam (26) is spaced apart from the rear longitudinal beam (27).

16. The vehicle according to any one of claims 12 to 15, wherein the A pillar is connected to the door sill reinforcing beam (244);
wherein in the front-rear direction of the vehicle, the A pillar is located on the front side of the front door sill diagonal brace rail (246), and the middle section of the top frame reinforcing beam (251), the A pillar, the C pillar front reinforcement (254), the door sill reinforcing beam (244), and the front door sill diagonal brace rail (246) form a side door ring (31).

17. The vehicle according to claim 11, wherein the rear section of the top frame reinforcing beam (251), the C pillar front reinforcement (254), the C pillar rear reinforcement (255), and the rear section of the door sill reinforcing beam (244) form a C pillar ring (32).

18. The vehicle according to any one of claims 1 to 17, wherein the top frame longitudinal beam (25) comprises a top frame outer panel (241), a top frame inner panel (253), and a top frame reinforcing beam (251), the top frame outer panel (241) and the top frame inner panel (253) are connected oppositely to form a top cavity, and the top frame reinforcing beam (251) is arranged in the top cavity.

19. The vehicle according to claim 18, wherein further comprising a C pillar top frame reinforcing beam joint (260), wherein the C pillar top frame reinforcing beam joint (260) is connected to the C pillar and connects the top frame reinforcing beam (251) and the strut beam (26).
